(19) **Europäisches Patentamt / European Patent Office / Office européen des brevets**

(11) **EP 3 374 795 B1**

(12) **FASCICULE DE BREVET EUROPEEN**

(45) Date de publication et mention de la délivrance du brevet:
**12.02.2025 Bulletin 2025/07**

(21) Numéro de dépôt: **16804836.1**

(22) Date de dépôt: **09.11.2016**

(51) Classification Internationale des Brevets (IPC):
**G01S 17/89** *(2020.01)* **G01S 15/89** *(2006.01)*

(52) Classification Coopérative des Brevets (CPC):
**G01S 15/8902; G01S 17/89**

(86) Numéro de dépôt international:
**PCT/FR2016/052917**

(87) Numéro de publication internationale:
**WO 2017/081416 (18.05.2017 Gazette 2017/20)**

(54) **SYSTÈME BATHYMÉTRIQUE ET MÉTHODE DE BATHYMÉTRIE CORRIGÉS DES ERREURS EN ALTITUDE**

AUF HÖHENFEHLER KORRIGIERTES BATHYMETRISCHES SYSTEM UND BATHYMETRISCHES VERFAHREN

BATHYMETRIC SYSTEM AND BATHYMETRY METHOD CORRECTED FOR ALTITUDE ERRORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2015 FR 1560887**

(43) Date de publication de la demande:
**19.09.2018 Bulletin 2018/38**

(73) Titulaire: **EXAIL**
**78100 Saint-Germain-en-Laye (FR)**

(72) Inventeurs:
• **NAPOLITANO, Fabien**
  **78750 Mareil-marly (FR)**
• **CHARLOT, Didier**
  **29480 Le Relecq-kurhuon (FR)**

(74) Mandataire: **Jacobacci Coralis Harle**
**32, rue de l'Arcade**
**75008 Paris (FR)**

(56) Documents cités:
**EP-A1- 0 140 258   WO-A1-01/42812**
**US-A- 4 924 448**

**Description**

DOMAINE TECHNIQUE AUQUEL SE RAPPORTE L'INVENTION

La présente invention concerne de manière générale le domaine des systèmes et méthodes de localisation de fond marin basés sur la réflexion d'ondes acoustiques ou lumineuses.

Elle concerne plus particulièrement un système bathymétrique ou de mesure de profondeur du fond marin ayant une grande précision de mesure.

ARRIERE-PLAN TECHNOLOGIQUE

Une grande partie de l'activité des services hydrographiques de différents pays consiste à déterminer la topographie des fonds marins grâce à des mesures de profondeur et de relief de ces fonds. Ce type de mesure, appelées mesures de bathymétrie, est également effectué par de nombreuses entreprises travaillant dans les domaines de la construction marine.

Il existe différents systèmes permettant d'effectuer des mesures de bathymétrie basés sur la propagation et la réflexion d'ondes acoustiques, les sonars, ou d'ondes optiques, les lidars. Un sonar ou un lidar peut être tracté par un bateau ou fixé à la coque d'un véhicule porteur, par exemple un bateau ou un sous-marin.

Des systèmes sonar utilisant la réflexion des ondes acoustiques sont couramment utilisés pour obtenir des mesures de bathymétrie et déterminer la distance entre le fond marin et le véhicule porteur du sonar. On connaît en particulier des systèmes sonar dits sonars multifaisceaux. Un sonar multifaisceaux comporte au moins un émetteur acoustique et plusieurs récepteurs acoustiques, et fonctionne par récurrence acoustique, où chaque récurrence acoustique consiste en l'émission d'un signal acoustique incident vers un fond marin suivi de la réception de plusieurs signaux réfléchis sur le fond marin sur les différents détecteurs acoustiques. Un sonar multifaisceaux de type classique fournit ainsi à chaque récurrence acoustique, la mesure de la profondeur du fond marin dans plusieurs directions (correspondant aux n faisceaux acoustiques réfléchis détectés) formant une fauchée, généralement perpendiculaire à l'axe du véhicule porteur. La combinaison de plusieurs récurrences acoustiques d'un sonar multifaisceaux permet de déterminer la bathymétrie des fonds marins sur un couloir le long de la route du véhicule porteur.

Lorsque les conditions le permettent et en particulier lorsque le fond marin est peu profond (moins d'environ une dizaine de mètres), un système LIDAR, basé sur la réflexion d'un faisceau laser, peut aussi être utilisé pour obtenir des mesures de bathymétrie et déterminer la distance entre le fond marin et le véhicule porteur de ce système LIDAR. On connait en particulier des systèmes de LIDAR à balayage de faisceau laser qui permettent, à chaque récurrence laser, de mesurer la profondeur du fond marin dans n directions (n réflexions de faisceau laser suivant n directions) formant une fauchée, en général perpendiculaire à l'axe du véhicule porteur. La combinaison de plusieurs récurrences lidar permet ainsi de déterminer la bathymétrie d'un fond marin sur un couloir le long de la route du véhicule porteur.

Pour effectuer une topographie de fond marin à partir des mesures provenant d'un système de type sonar multi-faisceaux ou lidar, il est nécessaire de prendre en compte la position et l'orientation du véhicule porteur du système de mesure, afin de positionner correctement les points de mesures correspondant aux différents faisceaux, appelés sondes, sur une carte géographique.

Ainsi, les systèmes de mesure de la topographie des fonds marins combinent en général un système SONAR ou LIDAR avec un système de navigation inertielle (INS) lui-même fréquemment couplé à un récepteur de géolocalisation et de navigation par satellite (GPS). L'utilisation d'un système de navigation inertielle permet de déterminer la position (x, y, z) et l'orientation (cap, roulis, tangage) du véhicule porteur et ainsi d'en tenir compte dans le positionnement géographique des sondes.

La méthode consistant à associer un système de mesure de la distance au fond avec un système inertiel est la méthode actuellement utilisée par l'ensemble des opérateurs de systèmes de bathymétrie dans le monde.

Cette méthode présente néanmoins deux inconvénients majeurs. D'une part le coût des systèmes de navigation inertiels requis, incluant fréquemment un récepteur GPS précis de type RTK, est relativement élevé. D'autre part, tandis que les systèmes inertiels permettent de déterminer précisément l'attitude (roulis, tangage), la position (x, y) dans un plan horizontal (avec des erreurs relatives de l'ordre de quelques centimètres sur des durées de quelques dizaines de secondes) et, pour les plus élaborés d'entre eux, le cap du véhicule porteur, ces systèmes inertiels ont pour défaut d'être relativement imprécis dans la détermination de l'altitude (z) du véhicule porteur suivant un axe vertical (avec des erreurs relatives atteignant rapidement plusieurs dizaines de centimètres voir quelques mètres sur des durées de quelques dizaines de secondes). La détermination de l'altitude (z) du véhicule porteur dépend donc de façon très importante de la disponibilité d'une information GPS de très grande qualité, avec une précision de l'ordre de quelques centimètres. Or cette information GPS de position verticale précise n'est en général pas disponible de façon continue dans l'espace et en particulier n'est pas disponible au large des côtes.

Certes, il est en général possible de déterminer l'altitude moyenne du véhicule porteur sur une période de temps de quelques minutes, typiquement en moyennant les valeurs fournies par un capteur imprécis. Il est par contre particulièrement difficile de déterminer très précisément les variations d'erreur d'altitude à court terme (quelques secondes à quelques dizaines de secondes). Or les variations d'erreur d'altitude à court terme ont un fort impact sur la qualité de la topographie obtenue.

Les techniques actuellement disponibles pour résoudre ce problème de détermination des variations d'erreur d'altitude du véhicule porteur à court terme se basent en général sur des hypothèses concernant soit le mouvement du véhicule porteur soit la topographie du sol soit la combinaison des deux. Ainsi, de nombreux systèmes inertiels, équipant les bateaux hydrographiques, utilisent des filtres de houles. Par construction de ces filtres de houle, on suppose que les fréquences des mouvements en altitude sont situées dans une gamme de relativement hautes fréquences ce qui permet d'éliminer les fréquences plus basses par filtrage numérique et donc de réduire l'erreur intrinsèque d'altitude des systèmes inertiels. Certaines méthodes de traitement purement acoustiques, telle la méthode décrite dans le document de brevet US2013/0016584, supposent également que les fréquences des mouvements du véhicule porteur sont plus élevées que les fréquences de variation de l'altitude du fond marin le long du parcours du véhicule porteur.

Malheureusement, les hypothèses de ces méthodes ne sont en général pas parfaitement satisfaites ce qui entraine des imperfections des cartes topographiques déterminées en les appliquant.

Le document EP0140258 décrit un système sonar comprenant un émetteur disposé suivant l'axe longitudinal du navire porteur et un récepteur disposé transversalement à l'axe longitudinal du navire porteur. Ce système sonar mesure un contour en 2D du fond marin comprenant un contour de calibration suivant l'axe longitudinal du navire. Ce document enseigne de faire pivoter simultanément l'émetteur et le récepteur de 90 degrés, pour acquérir un contour de test perpendiculaire à l'axe longitudinal du navire puis de comparer le contour de calibration avec le contour de test et en déduire une valeur de correction.

Le document WO 01/42812 décrit un système bathymétrique comportant un dispositif d'émission-réception fixé solidement à un bateau. Le dispositif d'émission-réception est adapté pour insonifier une zone du fond marin transversalement au cap du bateau et pour recevoir des faisceaux acoustiques réfléchis sur le fond. Selon ce document, le bateau entraîne le dispositif d'émission-réception acoustique suivant un trajet en méandres de manière à repasser à des instants différents au même endroit pour que les mesures successives présentent plusieurs points d'intersection, ces points d'intersection ayant théoriquement la même profondeur.

Un des buts de l'invention est de proposer un système et une méthode de bathymétrie permettant de corriger les mouvements du véhicule porteur, et en particulier les mouvements verticaux, sans faire d'hypothèse sur la topographie du fond marin ou sur les mouvements du véhicule porteur.

OBJET DE L'INVENTION

Afin de remédier à l'inconvénient précité de l'état de la technique, la présente invention propose un système bathymétrique comprenant un calculateur et un dispositif d'émission et de réception multi-faisceaux attaché à un véhicule porteur, le dispositif d'émission et de réception multi-faisceaux étant configuré pour émettre, à une première récurrence, un premier faisceau incident vers le fond marin suivant une première surface d'émission et pour détecter, à la première récurrence, l'amplitude d'une première pluralité de faisceaux réfléchis suivant une première pluralité de directions par réflexion du premier faisceau incident sur le fond marin, le calculateur étant configuré pour déterminer, à partir de l'amplitude de la première pluralité de faisceaux réfléchis détectés, les coordonnées spatiales tridimensionnelles d'une première pluralité de points de sonde situés à l'intersection du fond marin et de la première surface d'émission, ladite première pluralité de points de sonde formant une première fauchée à la première récurrence.

Plus particulièrement, on propose selon l'invention un système bathymétrique comprenant un calculateur et un dispositif d'émission et de réception multi-faisceaux attaché à un véhicule porteur, le dispositif d'émission et de réception multifaisceaux étant configuré à une première récurrence pour émettre un premier faisceau incident vers le fond marin suivant une première surface d'émission et pour mesurer l'amplitude d'une première pluralité de faisceaux réfléchis par réflexion du premier faisceau incident sur le fond marin, le calculateur étant configuré pour déterminer, à partir de l'amplitude de la première pluralité de faisceaux réfléchis détectés, les coordonnées spatiales tridimensionnelles d'une première pluralité de points de sonde situés à l'intersection du fond marin et de la première surface d'émission, ladite première pluralité de points de sonde formant une première fauchée à la première récurrence, caractérisé en ce que :- le dispositif d'émission et de réception multi-faisceaux comporte un sonar multi-faisceaux ayant une première et une deuxième antennes linéaires d'émission et de réception multifaisceaux, la première antenne linéaire étant disposée transversalement par rapport à la deuxième antenne linéaire, le dispositif d'émission et de réception multi-faisceaux étant fixé au véhicule porteur ;- le dispositif d'émission et de réception multi-faisceaux est configuré pour émettre, à une deuxième récurrence, un deuxième faisceau incident vers le fond marin suivant une deuxième surface d'émission, la deuxième surface d'émission étant non parallèle à la première surface d'émission, et les premier et deuxième faisceaux incidents étant non-interférents entre eux, la première récurrence et la deuxième récurrence étant séparées temporellement de plusieurs secondes à plusieurs dizaines de secondes,- le dispositif d'émission et de réception multi-faisceaux est configuré pour mesurer l'amplitude, à la deuxième récurrence, d'une deuxième pluralité de faisceaux réfléchis par réflexion du deuxième faisceau incident sur le fond marin,- le calculateur étant configuré pour déterminer, à partir de l'amplitude de la deuxième pluralité de faisceaux réfléchis détectés, les coordonnées spatiales tridimensionnelles d'une deuxième pluralité de points de sonde situés à l'intersection du fond marin et de la deuxième surface d'émission, ladite deuxième pluralité de points de sonde formant une deuxième fauchée, de manière à ce que au moins un point de sonde de la première fauchée soit redondant avec un point de sonde de la deuxième fauchée, un point de sonde redondant ayant des coordonnées spatiales bidimensionnelles dans un plan horizontal identiques aux première et deuxième récurrence, et- le calculateur étant configuré pour calculer une variation d'altitude du véhicule porteur à partir d'une différence de profondeur mesurée du au moins un point de sonde redondant entre la première récurrence et la deuxième récurrence, et- le calculateur étant configuré pour corriger en altitude les coordonnées spatiales tridimensionnelles de la deuxième fauchée, en fonction de la variation d'altitude du véhicule porteur calculée entre lesdites récurrences, dans lequel la première antenne est configurée pour émettre le premier faisceau incident, la deuxième antenne est configurée pour détecter la première fauchée à la première récurrence, et dans lequel la deuxième antenne est configurée pour émettre le deuxième faisceau incident, et la première antenne est configurée pour détecter la deuxième fauchée à la deuxième récurrence.

L'invention est ainsi mise en œuvre en combinant, d'une part, un dispositif physique configuré pour effectuer à chaque instant la mesure des sondes de telle façon que des points de sondes effectuées à deux instants de récurrence éloignés temporellement de plusieurs secondes se superposent spatialement en partie, et, d'autre part, un algorithme permettant de combiner des mesures effectuées à des instants de récurrence différents afin de déterminer la variation d'altitude du véhicule porteur entre ces instants de récurrence.

L'invention exploite la superposition spatiale partielle de différentes fauchées effectuées à différentes récurrences pour déterminer précisément les variations d'erreur d'altitude entre ces différentes récurrences.

L'invention permet ainsi de corriger les variations d'erreur d'altitude entre deux récurrences non corrélées entre elles, sans faire d'hypothèse sur les mouvements du véhicule porteur ou sur la topographie du fond marin.

Le système permet de corriger les mesures de bathymétrie en altitude entre deux récurrences, que ces récurrences soient consécutives ou non, dès qu'il existe au moins un point de sonde redondant appartenant à deux fauchées associées à ces deux récurrences. Ce système permet, de manière récursive, d'améliorer progressivement la précision des mesures de bathymétrie au fur et à mesure des récurrences.

Le système est configuré pour sonder le fond marin suivant au moins deux surfaces incidentes non parallèles entre elles, et pour collecter les ondes réfléchies dans plusieurs directions pour chaque surface incidente sondée. Ce système de correction des variations d'erreur d'altitude du véhicule porteur peut être adapté aisément à des systèmes bathymétriques existants, ayant par exemple une antenne multi-faisceaux à deux dimensions, ou deux antennes multifaisceaux disposées transversalement l'une par rapport à l'autre.

Selon l'invention

- le dispositif d'émission et de réception multi-faisceaux comporte un sonar multi-faisceaux ayant une première et une deuxième antennes linéaires d'émission et de réception multi-faisceaux, la première antenne linéaire étant disposée transversalement par rapport à la deuxième antenne linéaire ;
- d'une part, la première antenne est configurée pour émettre le premier faisceau incident lors de la première récurrence, et la deuxième antenne est configurée pour détecter la première fauchée lors de la première récurrence ; et, d'autre part, la deuxième antenne est configurée pour émettre le deuxième faisceau incident lors de la deuxième récurrence, et la première antenne est configurée pour détecter la deuxième fauchée lors de la deuxième récurrence ;

D'autres caracteristiques non limitatives et avantageuses du systeme bathymetrique conforme a l'invention, prises individuellement ou selon toutes les combinaisons techniquement possibles, sont les suivantes :

- la première antenne et la deuxième antenne sont disposées respectivement à environ 45 degrés d'une ligne de foi du véhicule porteur ;

  - le véhicule porteur comporte une ligne de foi et la première antenne est alignée sur cette ligne de foi;
  - le dispositif d'émission et de réception multi-faisceaux comporte un sonar multi-faisceaux ayant au moins une antenne de réception multi-capteurs à deux dimensions ;
  - le système bathymétrique comprend deux antennes d'émission et une antenne de réception linéaire multi-capteurs ;
  - le dispositif d'émission et de réception multi-faisceaux comporte un système lidar configuré pour émettre un faisceau laser vers le fond marin suivant une première et respectivement une deuxième surface d'émission, et pour détecter une pluralité de faisceaux laser réfléchis sur le fond marin, formant la première fauchée et respectivement la deuxième fauchée ;

- le système lidar comporte une source laser à balayage bidirectionnel de faisceau ou deux sources laser à balayage unidirectionnel de faisceau.

Selon un mode de réalisation particulier, le système bathymétrique comporte en outre au moins un capteur externe choisi parmi un système de géolocalisation par satellite (GPS), un capteur de profondeur ou une centrale de navigation inertielle, ce capteur externe étant configuré pour fournir au moins une mesure complémentaire de position et/ou d'orientation du dispositif d'émission et de réception multi-faisceaux, et le calculateur est configuré pour calculer une variation d'erreur d'altitude du véhicule porteur à partir des variations de coordonnées spatiales en altitude du au moins un point de sonde redondant entre la première récurrence et la deuxième récurrence et en fonction de ladite au moins une mesure complémentaire de position et/ou d'orientation.

L'invention propose également une méthode de bathymétrie comprenant les étapes suivantes :
a) émission, à une première récurrence, par une première antenne linéaire d'un dispositif d'émission et de réception multi-faisceaux fixé à un véhicule porteur, d'un premier faisceau incident apte à se propager dans un milieu sous-marin vers un fond marin suivant une première surface d'émission,b) détection par une deuxième antenne linéaire du dispositif d'émission et de réception multi-faisceaux, à la première récurrence, de l'amplitude d'une première pluralité de faisceaux réfléchis suivant une première pluralité de directions par réflexion du premier faisceau incident sur le fond marin,c) calcul, à partir de l'amplitude de la première pluralité de faisceaux réfléchis détectés, des coordonnées spatiales tridimensionnelles d'une première pluralité de points de sonde situés à l'intersection du fond marin et de la première surface d'émission, ladite première pluralité de points de sonde formant une première fauchée à la première récurrence,d) émission, à une deuxième récurrence, par la deuxième antenne linéaire du dispositif d'émission et de réception multifaisceaux, la première antenne linéaire étant disposée transversalement par rapport à la deuxième antenne linéaire, d'un deuxième faisceau incident apte à se propager dans le milieu sous-marin vers le fond marin suivant une deuxième surface d'émission, la deuxième surface d'émission étant non parallèle à la première surface d'émission, le premier faisceau incident et le deuxième faisceau incident étant non interférents entre eux, la première récurrence et la deuxième récurrence étant séparées temporellement de plusieurs secondes à plusieurs dizaines de secondes,e) détection, par la première antenne du dispositif d'émission et de réception multi-faisceaux, à la deuxième récurrence, de l'amplitude d'une deuxième pluralité de faisceaux réfléchis, suivant une deuxième pluralité de directions, par réflexion du deuxième faisceau incident sur le fond marin,f) calcul, à partir de l'amplitude de la deuxième pluralité de faisceaux réfléchis détectés, des coordonnées spatiales tridimensionnelles d'une deuxième pluralité de points de sonde situés à l'intersection du fond marin et de la deuxième surface d'émission, ladite deuxième pluralité de points de sonde formant une deuxième fauchée à la deuxième récurrence,g) détermination d'au moins un point de sonde redondant appartenant aux première et deuxième fauchées, un point de sonde redondant ayant des coordonnées spatiales bidimensionnelles dans un plan horizontal identiques aux première et deuxième récurrences,h) calcul d'une variation d'altitude du véhicule porteur en fonction d'une différence de profondeur mesurée du au moins un point de sonde redondant entre la première récurrence et la deuxième récurrence, eti) correction en altitude des coordonnées spatiales tridimensionnelles de la deuxième fauchée, en fonction de la variation d'altitude du véhicule porteur calculée à l'étape précédente.

## DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.
Sur les dessins annexés :

- la figure 1 représente en vue de dessus un système bathymétrique, de type sonar multi-faisceaux ou lidar, de l'art antérieur formant, à deux récurrences distinctes, des fauchées perpendiculaires à l'axe de déplacement horizontal du véhicule porteur ;
- la figure 2 représente en vue de dessus un système bathymétrique, de type sonar multi-faisceaux, selon un mode de réalisation de l'invention ;
- la figure 3 représente une autre vue de dessus du système bathymétrique, de type sonar multi-faisceaux ou lidar, selon un mode de réalisation de l'invention ;
- la figure 4 illustre schématiquement en vue de dessus les zones mesurées par le système bathymétrique, de type sonar multi-faisceaux, selon un mode de réalisation de l'invention.

## Dispositif

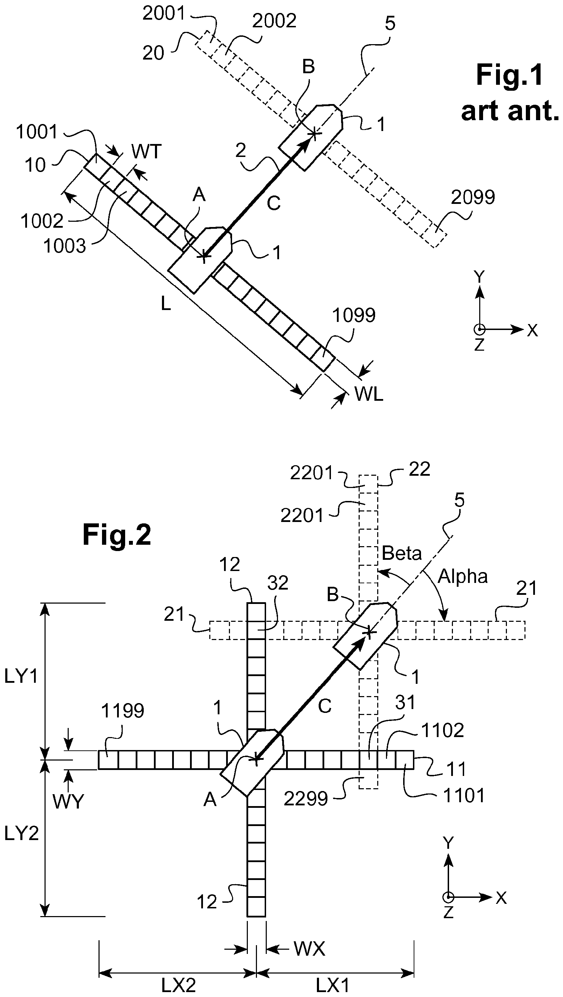

Sur les figures 1 à 4, on a représenté un repère orthonormé (X, Y, Z) local où le plan XY est un plan horizontal et l'axe Z un axe vertical.
Sur la figure 1, on a représenté, en projection sur un plan horizontal, le fonctionnement d'un système bathymétrique classique de type sonar multifaisceaux ou lidar selon l'art antérieur.

A titre d'exemple, on détaille la structure et le fonctionnement d'un système bathymétrique de type sonar multifaisceaux. Toutefois, les mêmes principes s'appliquent de manière analogue à un système bathymétrique de type lidar.

Le système bathymétrique comprend au moins un émetteur acoustique et une antenne de récepteurs acoustiques, par exemple de type linéaire, disposée transversalement à la ligne de foi 5 du bateau 1. L'émetteur acoustique et l'antenne de récepteurs acoustiques sont attachés à un véhicule porteur, par exemple fixés sous la coque d'un bateau 1 ayant une ligne de foi 5, c'est à dire une ligne de référence pointant vers la proue du bateau et correspondant à l'axe longitudinal du bateau.

Lors d'une première récurrence, le bateau 1 est à une première position repérée A, l'émetteur acoustique émet un signal acoustique vers le fond marin suivant une première surface d'émission et l'antenne de récepteurs acoustiques détecte l'amplitude des signaux acoustiques réfléchis dans des directions correspondant à chaque récepteur acoustique. La surface d'émission intersecte le fond marin suivant une figure géométrique, représentée de manière schématique par un segment de droite 10 sur la figure 1. A titre d'exemple, le segment de droite 10 a une longueur *L* et une largeur *WL.* La largeur *WL* correspond en général à la résolution longitudinale le long de la ligne de foi 5 du bateau. La longueur L et la largeur *WL* sont fonction de multiples paramètres, entre autres de l'ouverture du faisceau incident, du nombre de récepteurs acoustiques et de la profondeur du fond marin. Lors de la première récurrence, l'antenne de récepteurs acoustiques multi-faisceaux permet de mesurer l'amplitude d'une première pluralité de faisceaux acoustiques réfléchis suivant n directions. Le calculateur détermine, à partir de l'amplitude de la première pluralité de faisceaux acoustiques réfléchis détectés, les coordonnées spatiales tridimensionnelles d'un ensemble de points de sonde sur le segment de droite, avec une résolution transverse *WT.* On obtient ainsi les coordonnées spatiales tridimensionnelles (x, y, z) de M points de sonde 1001, 1002, 1003, ..., 1099 sur le segment de droite, où M un nombre entier naturel est égal à la longueur L divisée par la résolution spatiale transverse *WT.* M est en général choisi égal à 64, 128 ou 256 selon l'antenne acoustique. Les M points de sonde du fond marin forment une première fauchée 10, à la première récurrence. On collecte ainsi une première fauchée 10 dans l'axe de l'antenne linéaire de récepteurs acoustiques.

Le bateau se déplace d'une distance C suivant l'axe de déplacement 2 et se trouve à une deuxième position repérée B à un deuxième instant de récurrence. On effectue de manière analogue, lors de la deuxième récurrence, une deuxième fauchée 20, constituée de M points de sonde 2001, 2002, ..., 2099. La deuxième fauchée 20 a généralement la même résolution spatiale longitudinale et respectivement transverse que la première fauchée 11. En projection dans un plan horizontal, la deuxième fauchée 20 est ici parallèle à la première fauchée 10.

On constate que, sous réserve d'un avancement significatif du bateau, la distance C étant supérieure à la résolution spatiale longitudinale *WL,* les fauchées 10 et 20 effectuées à deux instants de récurrence différents n'ont aucun point de sonde en commun. Les informations de ces deux fauchées 10, 20 étant indépendantes, il n'est généralement pas possible de les combiner pour estimer une variation d'altitude du véhicule porteur entre ces deux instants de récurrence sans faire d'hypothèses sur les fréquences des mouvements du véhicule porteur par rapport aux fréquences de variation de l'altitude du fond marin le long du parcours du véhicule porteur.

Un aspect de l'invention repose sur l'acquisition de mesure des sondes de telle façon que les fauchées effectuées à des instants de récurrence différents se superposent en partie spatialement, ce qui permet de déterminer précisément les variations d'erreur d'altitude du véhicule porteur entre ces différents instants de récurrence.

Sur la figure 2, on représente schématiquement en vue de dessus le fonctionnement d'un système bathymétrique selon un premier mode de réalisation. Le système comporte ici une première antenne linéaire et une deuxième antenne linéaire, orientées de manière à former un angle ALPHA, respectivement BETA avec la ligne de foi 5 du véhicule porteur 1. De préférence, les angles ALPHA et BETA sont opposés, de manière à ce que les deux antennes linéaires soient disposées symétriquement par rapport à la ligne de foi 5 du véhicule porteur 1. Par exemple, la première antenne est alignée sur l'axe X et la deuxième antenne alignée sur l'axe Y du repère orthonormé (X, Y, Z). De façon avantageuse, les deux antennes linéaires ont la même longueur, le même nombre de récepteurs acoustiques et fournissent la même résolution spatiale longitudinale *WL,* respectivement la même résolution spatiale transverse *WT*.

A un premier instant de récurrence, le véhicule porteur 1 étant situé au point A, on collecte une première fauchée 11 suivant l'axe X de la première antenne. A titre d'exemple non limitatif, cette première fauchée est obtenue par l'émission d'un signal acoustique incident S1 sur la deuxième antenne et la formation des voies en réception sur la première antenne, en utilisant les méthodes classiques de formation de voies et un filtre adapté au signal S. Le procédé de formation de voies, classique pour tous les sonars multi-faisceaux, permet de collecter M points de sondes le long de la fauchée déterminée par l'antenne d'émission avec en général M=64, 128 ou 256 en fonction des spécifications de l'antenne. La première fauchée 11 comporte ainsi M points de sonde s'étendant suivant l'axe X.

A un deuxième instant de récurrence, le véhicule porteur 1 étant situé au point B, on collecte une deuxième fauchée 22 suivant l'axe Y de la deuxième antenne. De manière symétrique, cette deuxième fauchée 22 est obtenue par l'émission d'un autre signal acoustique incident S2 sur la première antenne et la formation des voies en réception sur la deuxième antenne. On obtient ainsi une deuxième fauchée 22 comportant aussi M points de sonde dans l'axe Y de la deuxième antenne.

Le déplacement C du bateau 1 du point A au point B est tel que la première fauchée intersecte la deuxième fauchée en un point de sonde redondant 31. Plus précisément, le point de sonde redondant 31 a les mêmes coordonnées en X et en Y dans un plan horizontal (XY) à la résolution des faisceaux acoustique près. Les faisceaux ayant une certaine largeur, chaque point de sonde correspond en fait à une petite zone de sonde de dimension WL*WT. Pour que deux points de sonde soient redondants, il suffit que les deux zones correspondante s'intersectent. Toutefois, la première fauchée est obtenue à un premier instant de récurrence et la deuxième fauchée à un deuxième instant de récurrence, qui peut être séparé de plusieurs dizaines de secondes du premier instant de récurrence. Par contre, la mesure de profondeur du point de sonde redondant 31 faisant partie de la première fauchée 11 au premier instant de récurrence est différente et indépendante de la mesure de profondeur du point de sonde redondant 31 faisant partie de la deuxième fauchée 22 au deuxième instant de récurrence, du fait des variations d'altitude et d'erreur d'altitude du véhicule porteur 1 entre la première et la deuxième récurrence.

Le calculateur utilise la différence de profondeur mesurée suivant l'axe Z de ce point de sonde redondant 31 entre le premier et le deuxième instant de récurrence pour estimer la variation d'altitude du véhicule porteur 1 entre ces deux instants de récurrence. On fait l'hypothèse que la première fauchée est à une position de référence en Z. Le calculateur compense cette variation d'altitude pour toutes les mesures de points de sonde de la deuxième fauchée. On obtient ainsi une topographie du fond marin de meilleure précision en altitude.

En fonction de la configuration des émissions-réceptions du sonar multifaisceaux, on peut former des fauchées de telle façon à avoir un ou plusieurs recouvrements partiels entre des fauchés obtenues à des instants de récurrence séparés temporellement de plusieurs secondes.

Différentes variantes sont considérées ici pour déterminer des fauchées ayant un ou plusieurs points de sonde redondants à des instants de récurrence séparés.

Selon une variante, de manière alternée, aux récurrences paires, on émet un signal acoustique sur la deuxième antenne et on reçoit des signaux acoustiques réfléchis en formant des voies sur la première antenne, et, aux récurrences impaires, on émet un autre signal acoustique sur la première antenne et on reçoit d'autres signaux acoustiques réfléchis en formant des voies sur la deuxième antenne.

Selon une autre variante, lors d'une récurrence sur K récurrences, où K est un nombre entier naturel, on émet un signal acoustique sur la deuxième antenne et on reçoit des signaux acoustiques réfléchis en formant des voies sur la première antenne, et aux K-1 récurrences suivantes, on émet un autre signal acoustique sur la première antenne et on reçoit des signaux acoustiques réfléchis en formant des voies sur la deuxième antenne. De préférence dans ce cas, la valeur de K est limitée, par exemple K compris entre 3 et 10 afin de conserver les propriétés de redondance entre fauchées non consécutives dans le temps.

Selon encore une autre variante, illustrée sur la figure 2, lors de la première récurrence, on émet un signal acoustique S2 sur la deuxième antenne et on reçoit des signaux acoustiques réfléchis par réflexion du signal S2 sur le fond marin en formant des voies sur la première antenne, et simultanément, lors de la première récurrence, on émet un autre signal acoustique S1 sur la première antenne et on reçoit des signaux acoustiques réfléchis par réflexion du signal S1 sur le fond marin en formant des voies sur la deuxième antenne. On procède de même lors de chaque récurrence. On choisit de préférence les signaux acoustiques S1 et S2 de telle façon à ce qu'ils présentent une inter-corrélation proche de zéro ce qui permet en réception de les distinguer puisque le filtre adapté d'un des signaux appliqué à l'autre donne une valeur de sortie proche de zéro. Par exemple S1 et S2 occupent des bandes de fréquences acoustiques distinctes. Dans ce cas, on acquiert, à la première récurrence, une première fauchée 11 suivant l'axe X et une première fauchée 12 suivant l'axe Y, puis on acquiert, à la deuxième récurrence, une deuxième fauchée 21 suivant l'axe X et une deuxième fauchée 22 suivant l'axe Y. La première fauchée 11 suivant l'axe X présente un point de sonde redondant 31 avec la deuxième fauchée 22 suivant l'axe Y. De plus, la première fauchée 12 suivant l'axe Y présente un autre point de sonde redondant 32 avec la deuxième fauchée 21 suivant l'axe X. On obtient ainsi deux points de sonde redondants 31, 32 distincts entre ces deux instants de récurrence. Par contre, les autres points de sonde de ces deux fauchées ne sont pas redondants entre eux.

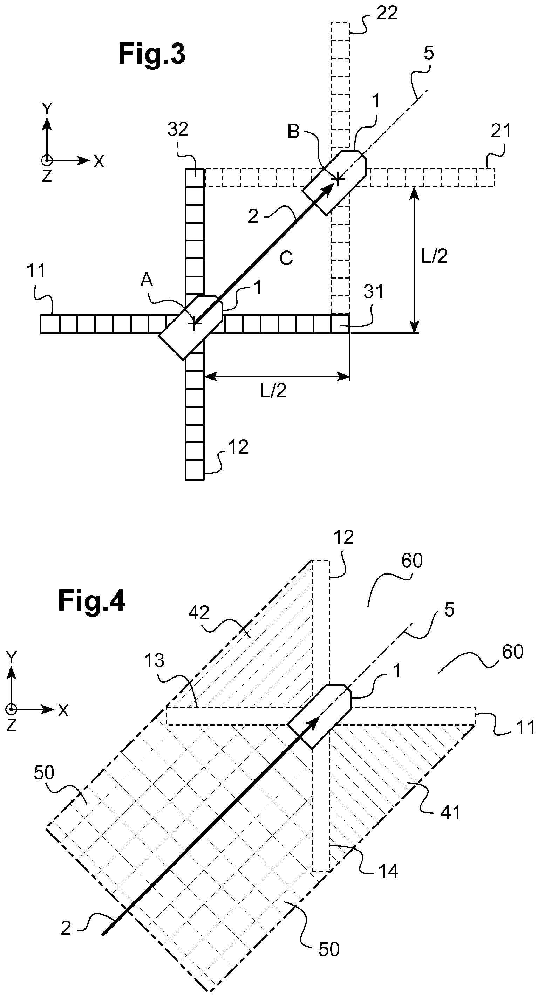

Dans un exemple de réalisation d'un système de bathymétrie illustré sur la figure 3, les antennes sont orientées à 45 degrés de la ligne de foi du bateau 1, l'émission et la réception des signaux acoustiques sont simultanées sur les deux antennes, l'ouverture des faisceaux acoustiques est de $\pm 60$ degrés, et la distance du fond environ de 150 mètres.

L'empreinte des faisceaux acoustiques émis à un instant donné sur le fond marin est composée de deux segments orthogonaux ayant chacun une longueur L de 260 mètres et se croisant à la verticale du bateau. En calculant les distances, comme illustré sur la figure 3, on observe que les fauchées 21, 22 obtenues à un deuxième instant de récurrence continuent à intersecter aux points de sonde 31, 32 situés aux extrémités des fauchées 11, 12 émises obtenues au premier instant de récurrence, lorsque le déplacement C du bateau reste inférieur ou égal à 180

$$m = \sqrt{2 \cdot 260^2}$$ entre ces deux instants de récurrence. Avec une vitesse de déplacement du bateau de l'ordre de 4 nœuds, on en déduit que les fauchées 21, 22 intersectent avec les fauchées 11, 12 pendant 90 s. Cette durée est largement suffisante pour résoudre le problème d'estimation des variations d'erreur d'altitude du véhicule porteur à court terme.

On constate que ces propriétés de recouvrement sont également valables dans les deux autres schémas d'émission consistant à alterner l'utilisation des antennes en fonction des récurrences, avec alternance de récurrences paire et impaire ou avec alternance d'une récurrence sur K. Le choix du schéma d'émission est alors déterminé en fonction d'autres spécifications de l'opération du système bathymétrique.

La configuration dans laquelle les antennes forment un angle de 45 degrés avec la ligne de foi du bateau est la plus intéressante en termes de redondance des points de sonde, ce qui est utile en particulier pour estimer les autres paramètres du mouvement. Néanmoins d'autres configurations peuvent être utilisées. Par exemple, on peut utiliser une configuration classique dans laquelle une des antennes est alignée avec l'axe longitudinal du bateau et l'autre antenne est disposée transversalement à cet axe.

La durée du recouvrement spatial obtenue en croisant les fauchées est ainsi bien supérieure à la durée du recouvrement de deux fauchées parallèles (comme illustré sur la figure 1), qui est limitée par la largeur *WL* d'une fauchée.

Selon une variante, il peut être utile de déphaser les signaux d'émission acoustique des différents transducteurs de chaque antenne afin de dépointer le signal émis par rapport au plan orthogonal à l'antenne. Dans ce cas, les fauchées du sonar ne sont plus des segments de droites mais des segments d'hyperboles, cependant on conserve en général la propriété de redondance partielle des points de sonde.

La fréquence des signaux acoustiques utilisés est généralement comprise 5 kHz et 1 MHz. La fréquence acoustique peut être adaptée en fonction de la portée et de la résolution souhaitées. La fréquence acoustique détermine principalement la portée et la résolution du système. L'invention s'applique indifféremment à n'importe quelle fréquence acoustique réfléchie par le fond marin et détectée par l'antenne multi-faisceaux.

<u>Procédé</u>

Dans la suite, nous détaillons un exemple, pour préciser le domaine technique inhérent à l'invention mais non lié à l'invention elle-même, de procédé de traitement des signaux entre récurrences distinctes, pour en extraire au moins un point redondant, et corriger les mesures de bathymétrie des mouvements du véhicule porteur.

Supposons que préalablement à la récurrence N on dispose d'une carte bathymétrique partielle du fond marin réalisée à partir des récurrences 1 à N-1 d'un système bathymétrique, basé sur un sonar multi-faisceaux ou sur un lidar tel que décrit plus haut, par exemple en lien avec les figures 2 et 3.

A la récurrence N, on obtient de nouveaux points de sondes. En première approximation, les coordonnées de ces points de sondes sont correctes à un décalage ou offset commun près, noté DZN, sur l'axe vertical. Etant donnée la configuration générale du système bathymétrique décrit plus haut, un certain nombre M>=1 des points de sonde obtenus à la récurrence N appartiennent à la zone déjà cartographiée et forment donc M points de sonde redondants. On dispose donc de M équations linéaires sur DZN, c'est-à-dire une équation par point de sonde redondant avec un point de sonde de la zone déjà cartographiée. Il suffit donc de trouver la valeur de DZN qui approche le mieux la solution de ces M équations. Par exemple on pose DZN égale à la moyenne des M' valeurs données par le sous-ensemble des M équations obtenu en retirant les points aberrants éventuels.

On observe que si M est égal à 1, on ne peut pas retirer de point aberrant. Par contre plus M est grand, plus il est possible de retirer un nombre important de points aberrants en utilisant une méthode statistique appropriée, par exemple une méthode de vraisemblance. En pratique, le nombre M est en général très significativement supérieur à 1. Généralement, dans un sonar multi-faisceaux, un segment de fauchée correspond à de nombreux faisceaux acoustiques, allant de quelques dizaines à quelques centaines de faisceaux acoustiques comme indiqué plus haut, et donc à de nombreuses sondes. Si la configuration d'antenne est bien choisie, le nombre de points de sondes redondants est très important. Sur la figure 4, on a représenté un sonar comportant deux antennes d'émissionréception disposées symétriquement à 45 degrés de la ligne de foi 5 du bateau 1, comme décrit en lien avec les figures 2-3, à un instant de récurrence N. Le sonar est par exemple configuré pour obtenir à chaque récurrence une fauchée s'étendant le long de l'axe X et une autre fauchée s'étendant le long de l'axe Y. Plus précisément, la fauchée suivant l'axe X comporte une moitié de segment de fauchée 13 et une autre moitié de segment de fauchée 11. De manière analogue, la fauchée suivant l'axe Y comporte, de part et d'autre d'un plan vertical passant par la ligne de foi du bateau, une moitié de segment de fauchée 12 et une autre moitié de segment de fauchée 14. Le bateau se déplace suivant l'axe de déplacement 2. A la récurrence N, la zone 60 du fond marin située à l'avant du bateau n'a pas encore été sondée. Les zones 41; 42 et 50 situées le long de la trace de déplacement du bateau, ont déjà été sondées lors des récurrences 1 à N-1. Plus précisément, la zone 41 a été cartographiée par l'antenne s'étendant suivant l'axe X, la zone 42 a été cartographiée par l'antenne s'étendant suivant l'axe Y et la zone 50, située à l'arrière du bateau, a déjà été cartographiée par ces deux antennes à différentes récurrences. Ainsi, à la récurrence N, la moitié de segment de fauchée 13 suivant l'axe X forme des points de sonde potentiellement redondants avec des points de sonde obtenus à une récurrence antérieure sur une moitié de l'antenne s'étendant suivant l'axe Y. De manière analogue, à la récurrence N, la moitié de segment de fauchée 14 suivant l'axe Y forme des points de sonde potentiellement redondants avec des points de sonde obtenus à une récurrence antérieure sur une moitié de l'antenne s'étendant suivant l'axe X. A la récurrence N, les points redondants peuvent former jusqu'à la moitié du nombre total de points de sonde obtenus, ce qui fournit un nombre de points de sonde redondants de l'ordre de 30 à 250, à la récurrence N.

Une fois la valeur de DZN estimée, on complète la carte bathymétrique du fond marin en utilisant les points de sonde obtenus à la récurrence N, corrigés de l'erreur d'altitude DZN.

On observe qu'une fois obtenue une cartographie partielle du fond marin, il est facile de la compléter en éliminant les effets des variations d'erreur d'altitude du véhicule porteur du système de mesure.

Le problème de recalage se ramène donc à obtenir une carte initiale avant de mettre en œuvre le procédé décrit ci-dessus. Il existe pour cela de nombreuses possibilités plus ou moins complexes suivant la qualité désirée pour l'estimation initiale de l'altitude. La plus simple consiste à prendre comme carte initiale la carte, très partielle mais suffisante, obtenue après la première sonde à partir des données d'altitude disponibles à la première récurrence. Plus généralement on peut prendre comme carte initiale la carte obtenue à partir des K premières récurrences en utilisant des estimations approchées de l'altitude du porteur. Dans le cas où le véhicule porteur est un bateau, on connait son altitude approchée puisque le bateau est par définition à la surface de la mer.

Selon une variante, le système bathymétrique comporte en outre un capteur d'altitude externe.

La méthode de correction des mouvements en altitude du véhicule porteur décrite ci-dessus se combine avantageusement avec l'utilisation d'un capteur d'altitude externe connecté au système bathymétrique. Par exemple, pour un bateau, un système GPS fournit l'altitude du bateau. Autre exemple, pour un système sous-marin, un capteur de pression fournit une mesure de la profondeur d'immersion du système d'émission-réception multi-faisceaux. Cette combinaison d'un système bathymétrique multi-faisceaux et d'un capteur externe permet d'améliorer progressivement la qualité de la carte bathymétrique en profitant de la bonne précision moyenne du capteur externe sur le long terme.

Pour combiner efficacement les mesures provenant du système bathymétrique multi-faisceaux et du capteur externe, on adapte l'étape d'estimation de la valeur du décalage DZN de la façon suivante.

A chaque récurrence, on pose DZN égal au barycentre de la moyenne des M' points de sondes redondants avec la carte et de la valeur ZN fournie par le capteur externe, les coefficients barycentriques étant déterminé à partir des incertitudes du capteur d'altitude externe d'une part, des points de sonde de la carte d'autre part.

A titre d'exemple, on pose :

$$DZN = 1/ (SIGMA2\_CARTE / M' + SIGMA2\_ZN) * ((SIGMA2\_CARTE / M') * ZN + (SIGMA2\_ZN) * MOYENNE)$$

où SIGMA2_ZN est la variance de l'erreur de mesure du capteur d'altitude externe, SIGMA2_CARTE est la variance de l'erreur d'altitude des points de la carte et MOYENNE est la moyenne des M' valeurs d'erreurs d'altitude données par le sous-ensemble des M équations de sondes redondantes obtenu en retirant les points aberrants.

Selon une variante du procédé, une estimation des autres paramètres du mouvement en translation et/ou en rotation du véhicule porteur est déduite des mesures de points de sonde redondants à des récurrences distinctes.

Dans ce cas, on peut utiliser la même approche en modifiant légèrement l'algorithme pour estimer les variations des autres paramètres du mouvement entre différents instants de mesure des points de sonde. En particulier on peut utiliser la même approche pour estimer les variations d'orientation (cap, roulis, tangage) du système bathymétrique multi-faisceaux. En effet chaque variation d'un de ces paramètres entre deux récurrences se traduit par une formule d'erreur définie sur la position géographique estimée des points de sonde en fonction de leur position relative par rapport au système de mesure bathymétrique multifaisceaux. Or la position relative du système de mesure bathymétrique est connue précisément par le principe de mesure du sonar multifaisceaux.

Par exemple, une erreur de roulis de R radians entraine pour un point à une distance D par rapport à l'axe principal du système de mesure, une erreur d'altitude en Z de la sonde égale à R * D.

En profitant des redondances multiples entre les points de sondes calculées à la récurrence N, avant l'étape de correction, et de la carte déterminée à partir des récurrences précédentes, on peut non seulement déterminer la valeur de DZN mais aussi celle de R.

Cette estimation se fait par exemple par une méthode de type moindres carrés dans laquelle on cherche à minimiser les distances entre les nouveaux points de sondes redondants et la carte préétablie (les méthodes de moindres carrées sont bien connues de l'homme de l'art ; les algorithmes donnés plus haut relèvent d'ailleurs également de la méthode des moindres carrés mais dans des cas plus simples).

Un procédé de correction analogue est applicable aux variations de cap et/ou de tangage.

On observe que la qualité de ces estimations dépend fortement du recouvrement spatial qui est obtenu entre des fauchées obtenues à des instants de récurrence différents. En pratique, la configuration avec les deux antennes à 45 degrés de l'axe longitudinal du bateau donne les meilleures conditions d'observabilité des erreurs et donc les meilleures estimations.

Là encore, de façon similaire à ce qui est indiqué plus haut concernant un capteur d'altitude externe, la méthode de correction peut être combinée de façon optimale avec l'utilisation d'un capteur externe, par exemple de type système de navigation inertielle, fournissant des estimations des variations de cap, roulis, tangage et déplacement.

**Revendications**

1. Système bathymétrique comprenant un calculateur et un dispositif d'émission et de réception multi-faisceaux attaché à un véhicule porteur (1), le dispositif d'émission et de réception multi-faisceaux étant configuré à une première récurrence pour émettre un premier faisceau incident vers le fond marin suivant une première surface d'émission et pour mesurer l'amplitude d'une première pluralité de faisceaux réfléchis par réflexion du premier faisceau incident sur le fond marin, le calculateur étant configuré pour déterminer, à partir de l'amplitude de la première pluralité de faisceaux réfléchis détectés, les coordonnées spatiales tridimensionnelles d'une première pluralité de points de sonde (1101, 1102, ..., 1199) situés à l'intersection du fond marin et de la première surface d'émission, ladite première pluralité de points de sonde (1101, 1102, ..., 1199) formant une première fauchée (11) à la première récurrence, **caractérisé en ce que** :

   - le dispositif d'émission et de réception multi-faisceaux comporte un sonar multifaisceaux ayant une première et une deuxième antennes linéaires d'émission et de réception multi-faisceaux, la première antenne linéaire étant disposée transversalement par rapport à la deuxième antenne linéaire, le dispositif d'émission et de réception multi-faisceaux étant fixé au véhicule porteur ;
   - le dispositif d'émission et de réception multi-faisceaux est configuré pour émettre, à une deuxième récurrence, un deuxième faisceau incident vers le fond marin suivant une deuxième surface d'émission, la deuxième surface d'émission étant non parallèle à la première surface d'émission, et les premier et deuxième faisceaux incidents étant non-interférents entre eux, la première récurrence et la deuxième récurrence étant séparées temporellement de plusieurs secondes à plusieurs dizaines de secondes,
   - le dispositif d'émission et de réception multi-faisceaux est configuré pour mesurer l'amplitude, à la deuxième récurrence, d'une deuxième pluralité de faisceaux réfléchis par réflexion du deuxième faisceau incident sur le fond marin,
   - le calculateur étant configuré pour déterminer, à partir de l'amplitude de la deuxième pluralité de faisceaux réfléchis détectés, les coordonnées spatiales tridimensionnelles d'une deuxième pluralité de points de sonde (2201, 2202, ..., 2299) situés à l'intersection du fond marin et de la deuxième surface d'émission, ladite deuxième pluralité de points de sonde formant une deuxième fauchée (22), de manière à ce que au moins un point de sonde de la première fauchée (11) soit redondant avec un point de sonde de la deuxième fauchée (22), un point de sonde redondant (31) ayant des coordonnées spatiales bidimensionnelles dans un plan horizontal identiques aux première et deuxième récurrence, et
   - le calculateur étant configuré pour calculer une variation d'altitude du véhicule porteur à partir d'une différence de profondeur mesurée du au moins un point de sonde redondant (31) entre la première récurrence et la deuxième récurrence, et
   - le calculateur étant configuré pour corriger en altitude les coordonnées spatiales tridimensionnelles de la deuxième fauchée (22), en fonction de la variation d'altitude du véhicule porteur (1) calculée entre lesdites récurrences, dans lequel la première antenne est configurée pour émettre le premier faisceau incident, la deuxième antenne est configurée pour détecter la première fauchée à la première récurrence, et dans lequel la deuxième antenne est configurée pour émettre le deuxième faisceau incident, et la première antenne est configurée pour détecter la deuxième fauchée à la deuxième récurrence.

2. Système bathymétrique selon la revendication 1, dans lequel la première antenne linéaire et la deuxième antenne linéaire sont disposées symétriquement à environ 45 degrés d'une ligne de foi (5) du véhicule porteur (1).

3. Système bathymétrique selon la revendication 1, dans lequel la première antenne linéaire est alignée sur une ligne de foi du véhicule porteur.

4. Système bathymétrique selon la revendication 1, dans lequel le dispositif d'émission et de réception multi-faisceaux comporte un système lidar configuré pour émettre un faisceau laser vers le fond marin suivant une première et respectivement une deuxième surface d'émission, et pour détecter une pluralité de faisceaux laser réfléchis sur le fond marin, formant la première fauchée (11) et respectivement la deuxième fauchée (22).

5. Système bathymétrique selon la revendication 4, dans lequel le système lidar comporte une source laser à balayage bidirectionnel de faisceau ou deux sources laser à balayage unidirectionnel de faisceau.

**6.** Système bathymétrique selon l'une des revendications 1 à 5, comportant en outre au moins un capteur externe choisi parmi un système de géolocalisation par satellite, un capteur de profondeur ou une centrale de navigation inertielle, et dans lequel le capteur externe est configuré pour fournir au moins une mesure complémentaire de position et/ou d'orientation du dispositif d'émission et de réception multi-faisceaux, et dans lequel le calculateur est configuré pour calculer une variation d'altitude du véhicule porteur à partir des variations de coordonnées spatiales en altitude du au moins un point de sonde redondant (31) entre la première récurrence et la deuxième récurrence et en fonction de ladite au moins une mesure complémentaire de position et/ou d'orientation.

**7.** Méthode de bathymétrie comprenant les étapes suivantes :

a) émission, à une première récurrence, par une première antenne linéaire d'un dispositif d'émission et de réception multi-faisceaux fixé à un véhicule porteur (1), d'un premier faisceau incident apte à se propager dans un milieu sous-marin vers un fond marin suivant une première surface d'émission,
b) détection par une deuxième antenne linéaire du dispositif d'émission et de réception multi-faisceaux, à la première récurrence, de l'amplitude d'une première pluralité de faisceaux réfléchis suivant une première pluralité de directions par réflexion du premier faisceau incident sur le fond marin,
c) calcul, à partir de l'amplitude de la première pluralité de faisceaux réfléchis détectés, des coordonnées spatiales tridimensionnelles d'une première pluralité de points de sonde (1101, 1102, ..., 1199) sonde situés à l'intersection du fond marin et de la première surface d'émission, ladite première pluralité de points de sonde (1101, 1102, ..., 1199) formant une première fauchée (11) à la première récurrence,
d) émission, à une deuxième récurrence, par la deuxième antenne linéaire du dispositif d'émission et de réception multi-faisceaux, la première antenne linéaire étant disposée transversalement par rapport à la deuxième antenne linéaire, d'un deuxième faisceau incident apte à se propager dans le milieu sous-marin vers le fond marin suivant une deuxième surface d'émission, la deuxième surface d'émission étant non parallèle à la première surface d'émission, le premier faisceau incident et le deuxième faisceau incident étant non interférents entre eux, la première récurrence et la deuxième récurrence étant séparées temporellement de plusieurs secondes à plusieurs dizaines de secondes,
e) détection, par la première antenne du dispositif d'émission et de réception multi-faisceaux, à la deuxième récurrence, de l'amplitude d'une deuxième pluralité de faisceaux réfléchis, suivant une deuxième pluralité de directions, par réflexion du deuxième faisceau incident sur le fond marin,
f) calcul, à partir de l'amplitude de la deuxième pluralité de faisceaux réfléchis détectés, des coordonnées spatiales tridimensionnelles d'une deuxième pluralité de points de sonde (2201,2202, .... 2299) situés à l'intersection du fond marin et de la deuxième surface d'émission, ladite deuxième pluralité de points de sonde formant une deuxième fauchée (22) à la deuxième récurrence,
g) détermination d'au moins un point de sonde redondant appartenant aux première et deuxième fauchées, un point de sonde redondant ayant des coordonnées spatiales bidimensionnelles dans un plan horizontal identiques aux première et deuxième récurrences,
h) calcul d'une variation d'altitude du véhicule porteur en fonction d'une différence de profondeur mesurée du au moins un point de sonde redondant (31) entre la première récurrence et la deuxième récurrence, et
i) correction en altitude des coordonnées spatiales tridimensionnelles de la deuxième fauchée, en fonction de la variation d'altitude du véhicule porteur calculée à l'étape précédente.

**Patentansprüche**

**1.** Bathymetrisches System mit einem Rechner und einer an einem Trägerfahrzeug (1) befestigten Mehrstrahlsende- und -empfangsvorrichtung, wobei die Mehrstrahlsende- und -empfangsvorrichtung dazu ausgelegt ist, bei einer ersten Folge einen ersten einfallenden Strahl zum Meeresboden hin entlang einer ersten Sendefläche auszusenden und die Amplitude einer ersten Vielzahl von reflektierten Strahlen des am Meeresboden reflektierten ersten einfallenden Strahls zu messen, wobei der Rechner dazu ausgelegt ist, von der Amplitude der ersten Vielzahl von erfaßten reflektierten Strahlen ausgehend, die dreidimensionalen räumlichen Koordinaten einer ersten Vielzahl von an der Schnittstelle des Meeresbodens und der ersten Sendefläche gelegenen Sondierungspunkten (1101, 1102, ..., 1199) zu bestimmen, wobei die erste Vielzahl von Sondierungspunkten (1101, 1102, ..., 1199) eine erste Kollekte (11) bei der ersten Folge bildet,
**dadurch gekennzeichnet, daß**

- die Mehrstrahlsende- und -empfangsvorrichtung ein Mehrstrahlsonar mit einer ersten und einer zweiten linearen Mehrstrahlsende- und -empfangsantenne aufweist, wobei die erste lineare Antenne quer zur zweiten linearen Antenne angeordnet ist, wobei die Mehrstrahlsende- und -empfangsvorrichtung am Trägerfahrzeug befestigt ist,
- die Mehrstrahlsende- und -empfangsvorrichtung dazu ausgelegt ist, bei einer zweiten Folge einen zweiten einfallenden Strahl zum Meeresboden hin entlang einer zweiten Sendefläche auszusenden, wobei die zweite Sendefläche zur ersten Sendefläche nicht parallel ist und der erste und der zweite einfallende Strahl nicht miteinander interferieren, wobei die erste Folge und die zweite Folge zeitlich um mehrere Sekunden bis zu mehreren Zehnereinheiten von Sekunden getrennt sind,
- die Mehrstrahlsende- und -empfangsvorrichtung dazu ausgelegt ist, bei der zweiten Folge die Amplitude einer zweiten Vielzahl von reflektierten Strahlen des am Meeresboden reflektierten zweiten einfallenden Strahls zu messen,
- der Rechner dazu ausgelegt ist, von der Amplitude der zweiten Vielzahl von erfaßten reflektierten Strahlen ausgehend, die dreidimensionalen räumlichen Koordinaten einer zweiten Vielzahl von an der Schnittstelle des Meeresbodens und der zweiten Sendefläche gelegenen Sondierungspunkten (2201, 2202, ..., 2299) zu bestimmen, wobei die zweite Vielzahl von Sondierungspunkten eine zweite Kollekte (22) bildet, so daß mindestens ein Sondierungspunkt der ersten Kollekte (11) mit einem Sondierungspunkt der zweiten Kollekte (22) redundant ist, wobei ein Sondierungspunkt (31) zweidimensionale räumliche Koordinaten in einer horizontalen Ebene aufweist, die bei der ersten Folge und der zweiten Folge identisch ist, und
- der Rechner dazu ausgelegt ist, eine Höhenänderung des Trägerfahrzeugs aus einem gemessenen Tiefenunterschied des mindestens einen redundanten Sondierungspunkts (31) zwischen der ersten und der zweiten Folge zu berechnen, und
- der Rechner dazu ausgelegt ist, die dreidimensionalen räumlichen Koordinaten der zweiten Kollekte (22) hinsichtlich der Höhe in Abhängigkeit von der zwischen den besagten Folgen berechneten Höhenänderung des Trägerfahrzeugs (1) zu korrigieren, wobei die erste Antenne dazu ausgelegt ist, den ersten einfallenden Strahl auszusenden, wobei die zweite Antenne dazu ausgelegt ist, die erste Kollekte bei der ersten Folge zu erfassen, und wobei die zweite Antenne dazu ausgelegt ist, den zweiten einfallenden Strahl auszusenden, und die erste Antenne dazu ausgelegt ist, die zweite Kollekte bei der zweiten Folge zu erfassen.

2. Bathymetrisches System gemäß Anspruch 1, bei dem die erste lineare Antenne und die zweite lineare Antenne unter etwa 45° symmetrisch zu einer Visierlinie des Trägerfahrzeugs ausgerichtet sind.

3. Bathymetrisches System gemäß Anspruch 1, bei dem die erste lineare Antenne auf eine Visierline des Trägerfahrzeugs ausgerichtet ist.

4. Bathymetrisches System gemäß Anspruch 1, bei dem die Mehrstrahlsende- und -empfangsvorrichtung ein Lidarsystem aufweist, das dazu ausgelegt ist, einen Laserstrahl zum Meeresboden entlang einer ersten beziehungsweise einer zweiten Sendefläche auszusenden und eine Vielzahl von auf dem Meeresboden reflektierten Laserstrahlen zu empfangen, die jeweils die erste Kollekte (11) und die zweite Kollekte (22) bilden.

5. Bathymetrisches System gemäß Anspruch 4, bei dem das Lidarsystem eine Laserquelle mit Abtastung durch den Strahl in zwei Richtungen oder zwei Laserquellen mit Abtastung durch den Strahl in einer Richtung aufweist.

6. Bathymetrisches System gemäß einem der Ansprüche 1 bis 5, das außerdem mindestens einen äußeren Sensor aufweist, der unter einem Satellitengeolokalisierungssystem, einem Tiefensensor oder einer Trägheitsnavigationszentrale ausgewählt ist, und bei dem der äußere Sensor dazu ausgelegt ist, mindestens eine zusätzliche Positions- und/oder Orientierungsmessung der Mehrstrahlsende- und -empfangsvorrichtung zu liefern, und bei dem der Rechner dazu ausgelegt ist, von den höhenmäßigen Änderungen von räumlichen Koordinaten des mindestens einen redundanten Sondierungspunkts (31) zwischen der ersten Folge und der zweiten Folge und in Abhängigkeit von der mindestens einen zusätzlichen Positions- und/oder Orientierungsmessung ausgehend, eine Höhenänderung des Trägerfahrzeugs zu berechnen.

7. Bathymetrisches Verfahren mit den folgenden Schritten:

a) bei einer ersten Folge, durch eine erste lineare Antenne einer an einem Trägerfahrzeug (1) befestigten Mehrstrahlsende- und -empfangsvorrichtung, Aussenden eines ersten einfallenden Strahls, der sich in einem Unterwassermilieu zu einem Meeresboden hin entlang einer ersten Sendefläche ausbreiten kann,
b) bei der ersten Folge, durch eine zweite lineare Antenne der Mehrstrahlsende- und -empfangsvorrichtung, Erfassen der Amplitude einer ersten Vielzahl von in einer ersten Vielzahl von Richtungen reflektierten Strahlen des am Meeresboden reflektierten ersten einfallenden Strahls,

c) aus der Amplitude der ersten Vielzahl von erfaßten reflektierten Strahlen, Berechnen der dreidimensionalen räumlichen Koordinaten einer ersten Vielzahl von Sondierungspunkten (1101, 1102, ..., 1199), die an der Schnittstelle des Meeresbodens mit der ersten Sendefläche liegen, wobei die erste Vielzahl von Sondierungspunkten (1101, 1102, ..., 1199) eine erste Kollekte (11) bei der ersten Folge bildet,

d) bei einer zweiten Folge, durch die zweite lineare Antenne der Mehrstrahlsende- und -empfangsvorrichtung, wobei die zweite Antenne quer zur ersten Antenne angeordnet ist, Aussenden eines zweiten einfallenden Strahls, der sich in einem Unterwassermilieu zu einem Meeresboden hin entlang einer zweiten Sendefläche ausbreiten kann, wobei die zweite Sendefläche zur ersten Sendefläche nicht parallel ist, wobei der erste und der zweite einfallende Strahl nicht miteinander interferieren, wobei die erste und die zweite Folge zeitlich um mehrere Sekunden bis zu mehreren Zehnereinheiten von Sekunden getrennt sind,

e) bei der zweiten Folge, durch die erste Antenne der Mehrstrahlsende- und -empfangsvorrichtung, Erfassen der Amplitude einer zweiten Vielzahl von in einer zweiten Vielzahl von Richtungen reflektierten Strahlen des am Meeresboden reflektierten zweiten einfallenden Strahls,

f) aus der Amplitude der zweiten Vielzahl erfaßter reflektierter Strahlen, Berechnen der dreidimensionalen räumlichen Koordinaten einer zweiten Vielzahl von Sondierungspunkten (2201, 2202, ..., 2299), die an der Schnittstelle des Meeresbodens mit der zweiten Sendefläche liegen, wobei die zweite Vielzahl von Sondierungspunkten (2201, 2202, ..., 2299) eine zweite Kollekte (22) bei der zweiten Folge bildet,

g) Bestimmen wenigstens eines redundanten Sondierungspunkts, der zu der ersten und zu der zweiten Kollekte gehört, wobei ein redundanter Sondierungspunkt zweidimensionale räumliche Koordinaten in einer bei der ersten und der zweiten Folge identischen horizontalen Ebene aufweist,

h) Berechnen einer Höhenänderung des Trägerfahrzeugs aus einem gemessenen Tiefenunterschied des mindestens einen redundanten Sondierungspunkts (31) zwischen der ersten und der zweiten Folge und

i) Korrigieren der dreidimensionalen räumlichen Koordinaten der zweiten Kollekte hinsichtlich der Höhe in Abhängigkeit von der im vorigen Schritt berechneten Höhenänderung des Trägerfahrzeugs.

## Claims

1. A bathymetric system comprising a computer and a multi-beam emitting and receiving device attached to a carrier vehicle (1), the multi-beam emitting and receiving device being configured to emit, in a first recurrence, a first incident beam towards the sea bottom following a first emission surface and to measure the amplitude of a first plurality of beams reflected by reflection of the first incident beam off the sea bottom, the computer being configured to determine, based on the amplitude of the first plurality of reflected beams detected, the three-dimensional spatial coordinates of a first plurality of sounding points (1101, 1102, ..., 1199) located at the intersection between the sea bottom and the first emission surface, said first plurality of sounding points (1101, 1102, ..., 1199) forming a first scan swath (11) in the first recurrence,

   **characterized in that**:

   - the multi-beam emitting and receiving device includes a multi-beam sonar having a first and a second multi-beam emitting and receiving linear antennas, the first linear antenna being arranged transversally with respect to the second linear antenna, the multi-beam emitting and receiving device being fixed to the carrier vehicle;
   - the multi-beam emitting and receiving device is configured to emit, in a second recurrence, a second incident beam towards the sea bottom following a second emission surface, the second emission surface being not parallel to the first emission surface, and the first and second incident beams not interfering with each other, the first recurrence and the second recurrence being temporally separated by a few seconds to a few tens of seconds,
   - the multi-beam emitting and receiving device being configured to measure, in the second recurrence, the amplitude of a second plurality of beams reflected by reflection of the second incident beam off the sea bottom,
   - the computer being configured to determine, based on the amplitude of the second plurality of reflected beams detected, the three-dimensional spatial coordinates of a second plurality of sounding points (2201, 2202, ..., 2299) located at the intersection between the sea bottom and the second emission surface, said second plurality of sounding points forming a second scan swath (22), so that at least one sounding point of the first scan swath (11) is redundant with a sounding point of the second scan swath (22), a redundant sounding point (31) having two-dimensional spatial coordinates in a horizontal plane that are identical in the first and second recurrences, and
   - the computer being configured to calculate a variation of the carrier vehicle altitude based on a measured depth difference of the at least one redundant sounding point (31) between the first recurrence and the second recurrence, and
   - the computer being configured to correct in altitude the three-dimensional spatial coordinates of the second scan swath (22), as a function of the calculated altitude variation of the carrier vehicle (1) between said recurrences, wherein the first antenna is configured to emit the first incident beam, the second antenna is configured to detect the first scan swath in the first recurrence, and wherein the second antenna is configured emit the second incident beam, and the first antenna is configured to detect the second scan swath in the second recurrence.

2. The bathymetric system according to claim 1, wherein the first linear antenna and the second linear antenna are arranged symmetrically at about 45 degrees from a lubber line (5) of the carrier vehicle (1).

3. The bathymetric system according to claim 1, wherein the first linear antenna is aligned to a lubber line of the carrier vehicle.

4. The bathymetric system according to claim 1, wherein the multi-beam emitting and receiving device includes a lidar system configured to emit a laser beam towards the sea bottom following a first, and respectively a second, emission surface, and to detect a plurality of laser beams reflected off the sea bottom, forming the first scan swath (11), and respectively the second scan swath (22).

5. The bathymetric system according to claim 4, wherein the lidar system includes a bidirectional beam scanning laser source or two unidirectional beam scanning laser sources.

6. The bathymetric system according to one of claims 1 to 5, further including at least one external sensor chosen among a satellite geolocation system, a depth sensor or an inertial navigation unit, and wherein the external sensor is configured to provide at least one complementary measurement of position and/or orientation of the multi-beam emitting and receiving device, and wherein the computer is configured to calculate a variation of the carrier vehicle altitude based on the altitude spatial coordinate variations of the at least one redundant sounding point (31) between the first recurrence and the second recurrence and as a function of said at least one complementary measurement of position and/or orientation.

7. A bathymetric method comprising the following steps:

a) emitting, in a first recurrence, by a first linear antenna of a multi-beam emitting and receiving device fixed to a carrier vehicle (1), a first incident beam capable of propagating in an underwater environment towards a sea bottom following a first emission surface,
b) detecting, by a second linear antenna of the multi-beam emitting and receiving device, in the first recurrence, the amplitude of a first plurality of beams reflected in a first plurality of directions, by reflection of the first incident beam off the sea bottom,
c) calculating, based on the amplitude of the first plurality of reflected beams detected, three-dimensional spatial coordinates of a first plurality of sounding points (1101, 1102, ..., 1199) located at the intersection between the sea bottom and the first emission surface, said first plurality of sounding points (1101, 1102, ..., 1199) forming a first scan swath (11) in the first recurrence,
d) emitting, in a second recurrence, by the second linear antenna of the multi-beam emitting and receiving device, the first linear antenna being arranged transversally with respect to the second linear antenna, a second incident beam capable of propagating in the underwater environment towards the sea bottom following a second emission surface, the second emission surface being not parallel to the first emission surface, and the second incident beam and the first incident beam not interfering with each other, the first recurrence and the second recurrence being temporally separated by a few seconds to a few tens of seconds,
e) detecting, by the first linear antenna of the multi-beam emitting and receiving device, in the second recurrence, the amplitude of a second plurality of beams reflected in a second plurality of directions by reflection of the second incident beam off the sea bottom,
f) calculating, based on the amplitude of the second plurality of reflected beams detected, the three-dimensional spatial coordinates of a second plurality of sounding points (2201, 2202, ..., 2299) located at the intersection between the sea bottom and the second emission surface, said second plurality of sounding points forming a second scan swath (22) in the second recurrence,
g) determining at least one redundant sounding point belonging to the first and second scan swaths, a redundant sounding point having two-dimensional spatial coordinates in a horizontal plane that are identical in the first and second recurrences,
h) calculating a variation of the carrier vehicle altitude as a function of a measured depth difference of the at least one redundant sounding point (31) between the first recurrence and the second recurrence, and
i) correcting in altitude the three-dimensional spatial coordinates of the second scan swath, as a function of the carrier vehicle altitude variation calculated at the previous step.

Fig.1
art ant.

Fig.2

# Fig.3

# Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130016584 A
- EP 0140258 A
- WO 0142812 A